# EUROPEAN PATENT SPECIFICATION

(11) **EP 1 166 567 B1**
(45) Date of publication and mention of the grant of the patent: **17.10.2007**
(21) Application number: 00919230.3
(22) Date of filing: 28.03.2000
(51) Int. Cl.: H04Q 3/00

(54) **DISTRIBUTION OF SERVICE EXECUTION ENVIRONMENTS WITH RESPECT TO A CENTRALIZED SERVICE SUPPLIER ENVIRONMENT**
VERTEILUNG VON DIENSTAUSFÜHRUNGSUMGEBUNGEN UNTER BERÜCKSICHTIGUNG EINER ZENTRALISIERTEN DIENSTANBIETERUMGEBUNG
DISTRIBUTION D'ENVIRONNEMENTS D'EXECUTION DE SERVICE PAR RAPPORT A UN ENVIRONNEMENT PRESTATAIRE DE SERVICE CENTRALISE

(30) Priority: 31.03.1999 US 282395
(43) Date of publication of application: 02.01.2002
(73) Proprietor: TELEFONAKTIEBOLAGET LM ERICSSON (publ), 164 83 Stockholm (SE)
(72) Inventor: BELIVEAU, André, Laval, Quebec H7X 3N4 (CA); MARCHAND, Laurent, Montreal, Quebec H3C 4N9 (CA); CAMERON, Duncan, Harlow Essex CM17 9QH (GB)
(74) Representative: Mohsler, Gabriele
(86) International application number: PCT/SE2000/000604
(87) International publication number: WO 2000/059239

(56) References cited:
- EP-A2- 0 778 520
- US-A- 5 428 782
- US-A- 5 978 484

## Description

### BACKGROUND OF THE INVENTION

### Technical Field of the Invention

The present invention relates to the provision of services within a telecommunications network and, in particular, to the distributed execution of services supplied to distributed service provision points from a centralized service supply point.

### Description of Related Art

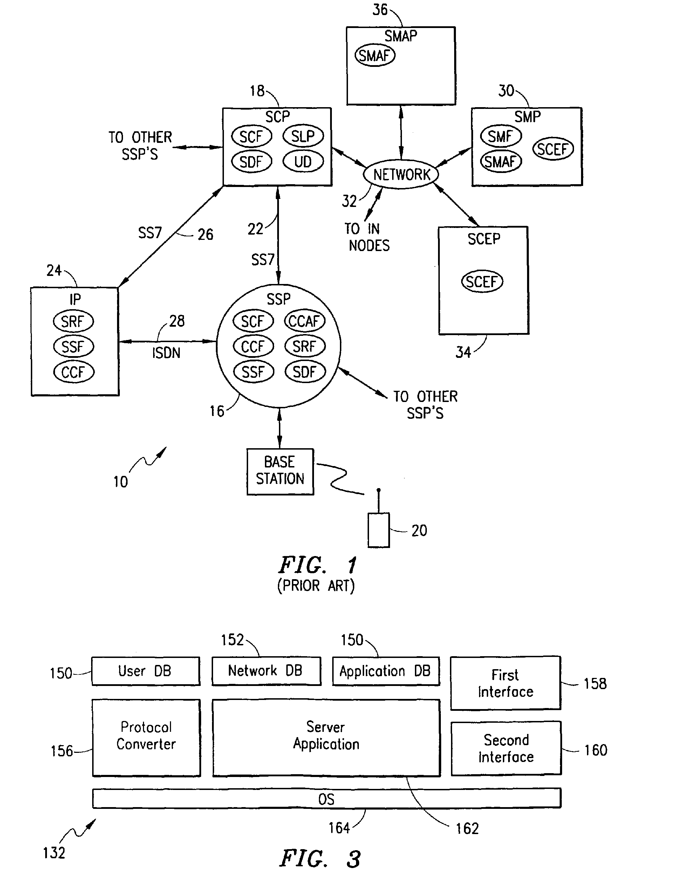

Reference is now made to FIGURE 1 wherein there is shown a block diagram of a conventional telecommunications network 10 configured to implement an Intelligent Network (IN) architecture. The phrase "Intelligent Network" denotes a network concept and architecture that provides vendor-independent and network-independent interfaces between the logic used to provide subscriber services and the transmission and switching systems of a multi-enterprise telecommunications network which supports service provision. The goals of the Intelligent Network architecture are to centralize the handling (storage and execution) of subscriber services within a single node of the telecommunication network 10 and to provide for rapid definition, testing and introduction of new services as well as the modification of existing services. The Intelligent Network architecture also provides greater flexibility in the design and development of new services in a multi-vendor environment with shorter lead times and standard network interfaces.

The basic concept behind the Intelligent Network architecture is to move the service provision intelligence out of each local exchange or Service Switching Point (SSP) 16. The service provision logic and intelligence are instead centralized in a Service Control Point (SCP) 18. By centralizing the logic for providing special subscriber services in the service control point 18, a new service can be added in only one place within the network 10 (i.e., in the service control point) and then provided to all subscribers who are served by the connected multiple service switching points 16. Accordingly, each service switching point 16 serves multiple telecommunications subscribers or terminals 20, while a single service control point 18 is provided to serve the subscriber service provision needs of multiple connected service switching points and their connected terminals. The interfaces between each of the service switching points 16 and the centralized service control point 18 are supported by signaling system number seven (SS7) communications links 22.

The service switching point 16 provides users with access to the network 10 (assuming that the service switching point is also a local exchange), performs any necessary switching functionality, and allows access to a set of Intelligent Network capabilities. The service switching point 16 contains detection capabilities (i.e., triggers) for detecting when requests for Intelligent Network services need to be made. It also contains capabilities for communicating with other Intelligent Network nodes that also possess a service control function (SCF), such as, for example, a service control point 18, and for responding to requests made from other Intelligent Network nodes. Functionally, the service switching point 16 further contains a call control function (CCF), a service switching function (SSF), and, if operating as a local exchange, a call control agent function (CCAF).

The service control function is a function that commands call control functions in the processing of Intelligent Network provided service requests and/or custom service requests. The service control function may interact with other functional entities to access additional logic or to obtain information (service or user data) required to process a call/service logic instance. The service control function contains the logic and processing capabilities required to handle Intelligent Network provided service attempts, and further interfaces and interacts with other service control functions, if necessary.

The call control function provides call/connection processing and control. More particularly, it establishes, manipulates and releases call/connection instances as requested by the call control agent function, provides the capability to associate and relate call control agent function functional entities that are involved in a particular call and/or connection instance, manages the relationship between call control agent function functional entities involved in a call, and provides trigger mechanisms to access Intelligent Network functionalities.

The service switching function provides the set of functions required for interaction between the call control function and the service control function. More particularly, it extends the logic of the call control function to include recognition of service control triggers, manages signaling between the call control function and the service control function, and modifies call connection processing functions in the all control function as required to process requests for Intelligent Network provided service usage under the control of the service control function.

The call control agent function provides the interface between a user and the network call control functions. More specifically, it provides for user access to and interacts with the user concerning the establishment, maintenance, modification and release of a call or an instance of service, accesses the service-providing capabilities of the call control function, receives indications relating to the call or service from the call control function and relays them to the user, and maintains call/service state information.

The service switching point 16 may further optionally contain a service control function (as described above), and/or a specialized resource function (SRF), and/or a service data function (SDF). The specialized resource function provides the specialized resources needed for the execution of Intelligent Network provided services (such as, for example, digit receivers, announcements, conference bridges, and the like). The specialized resource function may contain the logic and processing capability to receive/send and convert information received from users, and may contain functionality similar to call control function to manage bearer connections to the specialized resources. The service data function contains customer and network data for real time access by the service control function in the execution of an Intelligent Network service.

The service control point 18 contains the service logic programs (SLPs) that are used to provide Intelligent Network Services, and may optionally and additionally contain user data (UD). Although not illustrated, multiple service control points 18 may be provided which each such point containing the same service logic programs and user data in order to improve service reliability and to facilitate load sharing. Functionally, the service control point 18 contains a service control function (as described above), and may optionally contain a service data function (as also described above).

Hardware resources required to execute Intelligent Network services are grouped and located separately from service provision logic maintained in the service switching point 16. More specifically, the hardware is located within an Intelligent Peripheral (IP) 24 connected to the service control point 18. The purpose of such separation is to allow multiple service switching points 16 to share the same hardware resources, to decrease processor load in the service switching points 16 and the service control point 18 during service provision, and to provide common functionality to all Intelligent Network services. The interface between the service control point 18 and the intelligent peripheral 24 is an SS7 link 26. Integrated Service Digital Network (ISDN), which has the capability to transport voice data, is not used for this connection because there is no need for the establishment of a voice channel between the service control point 18 and the intelligent peripheral 24. The service control point 18 merely instructs the intelligent peripheral 24 with appropriate signaling messages to perform a certain specific function toward a specific subscriber using SS7 messages, and the actual voice connection needed for providing the intelligent peripheral services is accomplished via an ISDN connection 28 between the intelligent peripheral 24 and the service requesting service switching point 16. These interfaces allow telecommunications subscribers or terminals 20 connected to the service switching points 16 to interact with the hardware resources located in the intelligent peripheral 24 under the direction and control of the service control point 18. Functionally, the intelligent peripheral 24 includes a specialized resource function (as described above), and optionally contains a service switching function and call control function (both also described above) in order to provide external access to the connections to the hardware resources within the intelligent peripheral.

The hardware resources located in the intelligent peripheral 24 typically include, but are not limited to, audio announcements, speech synthesis, speech recognition, voice recognition, dual tone multi-frequency (DTMF) digit collection, audio conference bridges for conferencing, information distribution bridging, tone generators, text-to-speech conversion, protocol conversion, storage of customer messages, modems, e-mail, fax, and operator resources. The intelligent peripheral 24 contains a specialized resource function (as described above), and optionally further includes a service switching function/call control function (as also described above).

The Intelligent Network further contains a service management point (SMP) 30 that performs service management control, service provision control, and service deployment control. Examples of functions that the service management point 30 can perform are data base administration, network surveillance and testing, network traffic management, and network data collection. Functionally, the service management point 30 contains the service management function (SMF) and, optionally, the service management access function (SMAF), and the service creation environment function (SCEF). The service management point 30 has access to each of the nodes of the Intelligent Network (such as, for example, the service control points 18 and service switching points 16) through a management, provisioning and control network 32 that comprises, for example, an X.25 network. Through the network 32 connection, the service management point 30 may load services and related data into the service control point 18 and load corresponding triggers into the service switching points 16.

The service management function supports deployment and provision of Intelligent Network services and allows the support of ongoing operation. Particularly, for a given service, the service management function allows for coordination of different service control function and service data function instances, such as, for example, billing and statistical information are received from the service control function and made available to authorized users (i.e., service managers) through the service management access function, and modifications in service data are distributed in the service data function with the service management function acting to keep track of reference service data values.

The service management access function provides an interface between service managers and the service management function. Using this function, service managers may manage their own services.

The service creation environment function allows services provided in an Intelligent Network to be defined, developed, tested and input to the service management function. Outputs of this function include, for example, service logic, service management logic, service data templates and service trigger information.

Intelligent Network services are defined, developed and tested using a service creation environment point (SCEP) 34. Through the service creation environment point 34, a service may be input into the service management point 30 for subsequent deployment into the Intelligent Network. Functionally, the service creation environment point 34 contains the service creation environment function (as described above). The management, provisioning and control network 32 is used to connect the service creation environment point 34 with the service management point 30.

Some users of the Intelligent Network, such as service managers or some customers, need to have access to the service management point 30 in order to review service and data status. This access is provided through a service management access point (SMAP) 36. Functionally, the service management access point 36 contains a service management access function (as described above). The management, provisioning and control network 32 is used to connect the service management access point 36 with the service management point 30.

It is important for operators and service providers to be able to distinguish their services from the services supplied by competitors, and further to be able to develop and deploy those services as quickly as possible. Some of the limiting factors which exist today in accomplishing these goals within an Intelligent Network are: first, that the time from service conception to service deployment is often much longer than anticipated; second, that the functionalities for service creation and execution are often vendor proprietary; and, third, that the Intelligent Network architecture provides for an unduly limiting network-centric approach to service provision. One issue to note with respect to the second factor is that the operator or service provider may not have access to the proprietary technical information which is needed to properly create an executable service. Furthermore, the proprietary technical information, even if available to the operator or service provider may be limited in scope as to where the service may be deployed. More specifically, a service designed with certain proprietary technical information in mind may limited for use within a certain type of network (such as, for example, a GSM network) or only within a network supported by a certain vendor's equipment. One issue to note with respect to the third factor is that the Intelligent Network approach incorrectly assumes that mobile terminals are not "smart enough" to assist in the provisioning of services. The trend is now, however, moving toward providing more and more intelligent and sophisticated terminals. As a result, it is recognized that the execution of service may be more efficiently performed in the terminal or a network node other than the service control point. Furthermore, because there exist a number of triggering nodes and a single centralized service execution node, and further because the complete provision of a single service may require many queries to be made to the service control point, the Intelligent Network architecture requires a significant, and perhaps unacceptable, amount of inter-node signaling when providing a service or combination of services. The result of the foregoing with respect to a convention Intelligent Network architecture may be an unacceptable narrowing of the availability of what the new services can be, who can provide them, and where they will be available.

In the area of client server computing European Patent EP-A- 0 778 520 is pertinent, that discloses a client-server system, in that a plurality of distributed client computers administrate and store a plurality of architecture neutral programs that are compiled and converted to architecture specific programs by a central server computer.

### SUMMARY OF THE INVENTION

Executable code for service along with its associated data are stored in a service supplier environment of a network centralized node. A plurality of service execution environments are distributed throughout the network, each associated with a service provision point. Responsive to a triggering of a service request at one of those service provision points, its associated service execution environment downloads the corresponding service and its associated data from the service supplier environment of the centralized node. Following the download, the service execution environment executes the downloaded executable code for the requested service in view of the downloaded data to provide the service at the requesting service provision point.

When implemented within a wireless mobile telecommunications network, the service provision point may be a visitor location register, a switching node, a base station or a mobile station.

### BRIEF DESCRIPTION OF THE DRAWINGS

A more complete understanding of the method and apparatus of the present invention may be acquired by reference to the following Detailed Description when taken in conjunction with the accompanying Drawings wherein:
FIGURE 1, previously described, is a block diagram of a conventional telecommunications network configured to implement an Intelligent Network (IN) architecture;
FIGURE 2 is a block diagram of a telecommunications network including an architecture in accordance with the present invention;
FIGURE 3 is a block diagram of the overall logical structure of the service supplier environment; and
FIGURE 4 is a block diagram of the overall logical structure of the service execution environment.

### DETAILED DESCRIPTION OF THE DRAWINGS

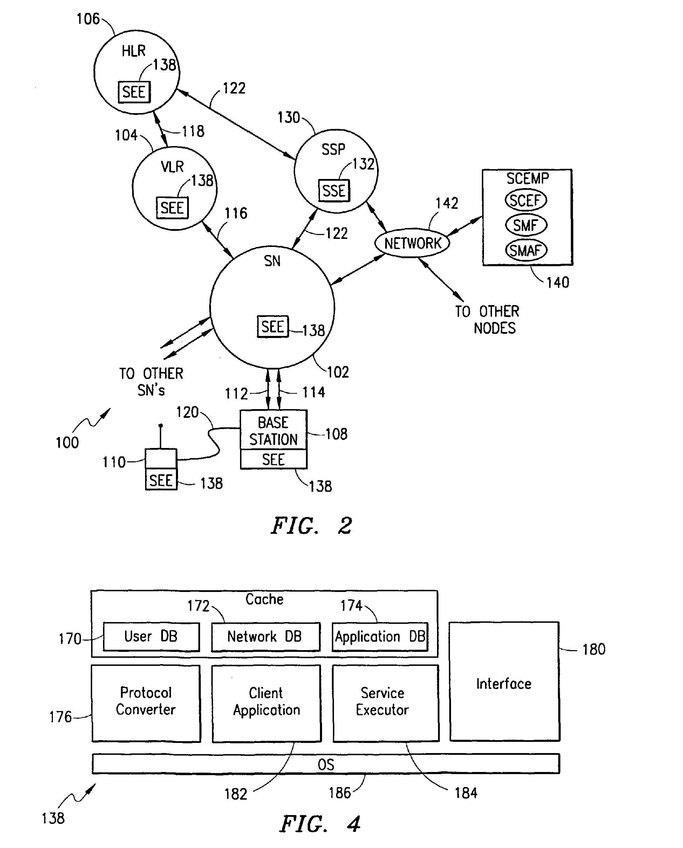

Reference is now made to FIGURE 2 wherein there is shown a block diagram of a telecommunications network 100 in accordance with the present invention. The network 100 has a conventional baseline wireless telecommunications network architecture including a switching node (SN) 102, a visitor location register (VLR) 104, a home location register (HLR) 106, a base station (BS) 108 and a mobile station (MS) 110. Although the network is illustrated for exemplary purposes as a wireless (e.g., cellular) network, it will of course be understood that the network may instead comprise a wireline network. The switching node 102 is connected to other switching nodes and to the base station 108 using both voice links 112 and signaling links 114. The visitor location register 104 is connected to the switching node 102 using a signaling link 116, and the home location register 106 is connected to the visitor location register using a signaling link 118. The base station 108 is in communication with the mobile station 110 over an air-interface 120. Operation of the network 100 to provide basic calling service (call originations, call set-up and delivery, call handoff, and the like) is well known to those skilled in the art and will not be further described herein.

The architecture for the network 100 of the present invention differs from the conventional baseline architecture (such as that supported in an Intelligent Network like that illustrated in FIGURE 1) in that there is no centralized node (like a service control point) charged with task of both supplying and executing services. On the contrary, the architecture for the network 100 of the present invention includes a centralized node (hereinafter referred to as a service supply point (SSP) 130) which implements a service supplier environment (SSE) 132 to store a library of available services along with their associated data. The service supply point 130 is connected to the nodes of the network 110 (such as the home location register 106, visitor location register 104, switching node 102 or base station 108) by signaling links 122. The network nodes, as well as the mobile station 110 itself, each may, if needed, include an associated service execution environment (SEE) 138 where the service supplier environment 132 stored and supplied services are actually executed. More particularly, triggers (similar to Intelligent Network triggers) within the home location register 106, visitor location register 104, switching node 102, base station 108 and/or mobile station 110 cause a service request to be made to the associated service execution environment 138. The service execution environment 138 then responds to the request by downloading the appropriate service and its associated data from the service supplier environment 132 located in the centralized service supply point 130. The downloaded service is then executed by the service execution environment 138 associated with the entity that triggered the service request. After execution, the downloaded service may be released by or, if popular and likely to be requested again in the near future, cached for a short time in, the service execution environment 138.

The individual nodes of the network illustrated in FIGURE 2 include, where necessary, functionalities either identical or similar to those functionalities described above in connection with the Intelligent Network of FIGURE 1. For example, the service execution environment comprises the execution part of an SCF and is operable to cache the service program and data. Also, the service supplier environment comprises an SDF extended with functionality to store service programs.

The services for the network 100 are defined, developed and tested using a service creation environment and management point (SCEMP) 140. Through the service creation environment and management point 140, a service and its associated data may be loaded into the service supply point 130 and stored in the service supplier environment 132, and triggers for service requests may be established within the appropriate nodes of the network. Functionally, the service creation environment and management point 140 contains a service creation environment function (SCEF), a service management function (SMF) and a service management access function (SMAF). The service creation environment function allows services provided in the network 100 to be defined, developed, tested and input. The service management function supports deployment and provision of network services and allows the support of ongoing operation. The service management access function provides an interface between service managers and the service management function. Using this function, service managers may manage their own services. Outputs of this function include, for example, service logic, service management logic, service data templates and service trigger information. The service creation environment point 140 has access to each of the nodes of the network 100 (such as, for example, the home location register 106, visitor location register 104, switching node 102 or base station 108) through a management, provisioning and control network 142 that comprises, for example, an X.25 network.

Although not explicitly illustrated, the network of FIGURE 2 also includes intelligent peripherals as described above in connection with the Intelligent Network of FIGURE 1. In this context, it is recognized that the service execution environment may be included within an intelligent peripheral.

In the preferred embodiment, the service execution environment 138 along with its associated entity (such as the home location register 106, visitor location register 104, switching node 102, base station 108 and/or mobile station 110) comprises a Java virtual machine. Thus, the executable code that is downloaded from the service supply point 130 for each of the services 134 may comprise Java byte code (i.e., Java beans). One benefit of using Java in this environment is that the services may be executed by the service execution environment 138 independent of the underlying operating system or processor implemented by the associated entity because the applications see only the capabilities provided by the virtual machine.

Additionally, distribution of the service execution environments 138 from the centralized service supplier environment 132 is supported through use of the Common Object Request Broker Architecture (CORBA) within the network 100. CORBA allows applications (or components of an application) to communicate with one another no matter where the applications (components) are located, who designed the applications (components), or what language is used to write the applications (components). Through the functionality provided by an included object request broker, CORBA provides for both inter-operability between applications (components) on different machines in heterogeneous distributed environments and seamless interconnection of multiple object systems. One benefit of using CORBA in this environment is that a given service application may be broken into components, with the components most efficiently executed at the best selected one of plural available service execution environments 138 within the network 100.

Reference is now made to FIGURE 3 wherein there is shown a block diagram of the overall logical structure of the service supplier environment 132. A user database 150 stores user specific information pertinent to the provision of services. As an example, the user database 150 may store for each user their own specified call forwarding data (for use in connection with the provision of a call forwarding service) and a white/black list (for use in connection with the provision of a call blocking service). A network database 152 stores data concerning the configuration of the network 100 and data shared in common between users and used in connection with the provision of certain services. As an example, the network database 152 may store "1-800" numbers and an identification of the permitted area codes which may be dialed. An application database 154 stores the executable Java byte code for implementing each service. The byte code is preferably held within the database as a type of binary object. A protocol converter 156 operates the convert between the protocol(s) used for the requests made to the service supplier environment 132 and the protocol(s) used within the service supplier environment. As an example, the protocol converter 156 may operate to map signaling system number seven (SS7) to CORBA. With such a functionality, the protocol converter 156 would be able to convert between SS7 ANSI-41, MAP or INAP messages and CORBA messages utilizing TCP/IP. One advantage provided by the use of such a protocol converter 156 is that it insulates the application designer from having to learn SS7 in connection with the designing of new service applications. The protocol converter 156 further includes a network interface part which allows the service supplier environment 132 to make external communications connections to any one of a number of potential networks such as, for example, ATM, SS7 and TCP/IP. A first interface 158 provides authorized persons with a mechanism for accessing and modifying the information stored within the user database 150 and the network database 152. Furthermore, it is through this first interface 158 that the Java byte code for services defined, developed and tested by the service creation environment and management point 140 is downloaded for storage in the application database 154. A second interface 160 provides authorized persons with access to the service supplier environment 132 in order to start-up, shut down and perform regular maintenance on the machine. A server application 162 operates to access and retrieve data from the user database 150, the network database 152 and the application database 154 in response to received requests. Each of the foregoing components of the service supplier environment 132 sit on top of a suitable operating system 164 such as, for example, TELORB, UNIX, or Windows NT. Use of a Java virtual machine supporting CORBA is, of course, necessary.

Reference is now made to FIGURE 4 wherein there is shown a block diagram of the overall logical structure of the service execution environment 138. A user database 170 cache stores user specific information pertinent to the provision of services which has been downloaded from the service supplier environment 132. A network database 172 cache stores data concerning the configuration of the network 100 and data shared in common between users and used in connection with the provision of certain services which has been downloaded from the service supplier environment 132. An application database 174 cache stores the executable Java byte code for implementing a service which has been downloaded from the service supplier environment 132. A protocol converter 176 (including appropriate network interfaces) operates the convert between the protocol(s) used for the requests made to the service supplier environment 132 and the protocol(s) used within the service execution environment 138. An interface 180 provides authorized persons with access to the service execution environment 138 in order to start-up, shut down and perform regular maintenance on the machine. A client application 182 operates responsive to triggers to request downloads from the service supplier environment 132 in connection with the provision of services. A service executor 184 takes the downloaded Java byte code for the requested service and executes the code (in view of the user database 170 and network database 172 cached information) to provide the service. Each of the foregoing components of the service execution environment 138 sit on top of a suitable operating system 186 such as, for example, TELORB, UNIX, Windows, or an embedded application.

Reference is now made in combination to FIGURES 2, 3 and 4. Operation of the network of the present invention may be better understood in the context of some specific examples. Services are defined, developed and tested using the service creation environment and management point (SCEMP) 140. The resulting Java byte code for each of these services is then loaded by the service creation environment and management point 140 into the service supply point 130 and stored in the application database 154 of the service supplier environment 132. The triggers defined for each of these services are further set by the service creation environment and management point 140 in appropriate ones of the nodes of the network 100 (such as, for example, the home location register 106, visitor location register 104, switching node 102 and/or base station 108) where requests for the services need to be originated. Further, to the extent the service may be triggered at the mobile station 110, appropriate triggers for the services are also set within the mobile station itself. Any network data relating to these services is also loaded by the service creation environment and management point 140 into the service supply point 130 and stored in the network database 152 of the service supplier environment 132. Each subscriber who chooses to subscribe to these services further has appropriate subscriber data relating to these services entered into the service supply point 130 and stored in the user database 150 of the service supplier environment 132.

Turning now to a specific service such as a call blocking service, the Java byte code for the service and any corresponding network data relating thereto are stored in the application database 154 and network database 152 of the service supplier environment 132. Furthermore, the subscriber has stored within the user database 150 of the service supplier environment 132 a list of phone numbers (i.e., a black list) identifying terminals to which outgoing calls, and from which incoming calls, are not to be completed. The trigger for implementing this service is maintained within the base station 108 which is associated with a service execution environment 138. Responsive to, for example, an outgoing call being made from the mobile station 110, the trigger is tripped in the base station 108, a service request is made by the base station to its associated service execution environment 138, and the client application 182 (through the protocol converter 176) within the service execution environment sends a request to the service supplier environment 132 for a download of the call blocking service Java byte code and any related user and/or network data. Responsive to the request, the server application 162 within the service supplier environment 132 extracts the appropriate Java byte code from the application database 154, as well as the subscriber specified phone number list from the user database 150, and makes a download (through its protocol converter 156) to the service execution environment 138 at the base station 108. The Java byte code for the call blocking service is then cache stored in the application database 174 of the service execution environment 138, and the phone number list is cache stored in the user database 170. The service executor 184 then executes the downloaded Java byte code for the call blocking service to determine whether the digits dialed for the outgoing call match any of the user specified phone numbers. If so, the service executor 184 blocks the call. If not, the call is allowed to proceed. The service execution environment 138 may then discard the downloaded service and user data from the cache.

It is now assumed that the trigger for implementing this service is instead maintained within the mobile station 110 which is associated with its own service execution environment 138. Responsive to, for example, a subscriber dialing of an outgoing call, the trigger is tripped in the mobile station 110, a service request is made by the mobile station to its associated service execution environment 138, and the client application 182 (through the protocol converter 176) within the service execution environment sends a request to the service supplier environment 132 for a download of the call blocking service Java byte code and any related user and/or network data. Responsive to the request, the server application 162 within the service supplier environment 132 extracts the appropriate Java byte code from the application database 154, as well as the subscriber specified phone number list from the user database 150, and makes a download (through its protocol converter 156) to the service execution environment 138 at the base station 108. The Java byte code for the call blocking service is then cache stored in the application database 174 of the service execution environment 138, and the phone number list is cache stored in the user database 170. The service executor 184 then executes the downloaded Java byte code for the call blocking service to determine whether the digits dialed for the outgoing call match any of the user specified phone numbers. If so, the service executor 184 blocks the call. If not, the call is allowed to proceed. The service execution environment 138 in this situation may instead choose to retain the downloaded service and user data in the cache in anticipation of the dialing of another outgoing call. Typically, the downloaded service and user data are not discarded from the cache until a such time as a different service trigger is tripped in the mobile station thus causing a next service download to be performed.

Turning next to a different specific service such as a time dependent routing service, the Java byte code for the service and any corresponding network data relating thereto are stored in the application database 154 and network database 152 of the service supplier environment 132. Furthermore, the subscriber has stored within the user database 150 of the service supplier environment 132 an identification of the times of day when an incoming call is permitted to be completed to the mobile station 110, as well as a voice mail box number and times of day when incoming calls are instead to be forwarded to voice mail. The trigger for implementing this service is maintained within the switching node 102 which is associated with a service execution environment 138. Responsive to a received incoming call dialed to the subscriber's mobile station 110, the trigger is tripped in the switching node 102, a service request is made by the switching node to its associated service execution environment 138, and the client application 182 (through the protocol converter 176) within the service execution environment sends a request to the service supplier environment 132 for a download of the time dependent routing service Java byte code and any related user and/or network data. Responsive to the request, the server application 162 within the service supplier environment 132 extracts the appropriate Java byte code from the application database 154, as well as the subscriber specified times of day and voice mail box number from the user database 150, and makes a download (through its protocol converter 156) to the service execution environment 138 at the base station 108. The Java byte code for the time dependent routing service is then cache stored in the application database 174 of the service execution environment 138, and the times of day and voice mail box number are cache stored in the user database 170. The service executor 184 then executes the downloaded Java byte code for the time dependent routing service to compare the current time of day to the subscriber specified times of day and then appropriately route the incoming call to either the mobile station 110 or the subscriber's voice mail box. The service execution environment 138 may then discard the downloaded service and user data from the cache.

Although preferred embodiments of the method and apparatus of the present invention have been illustrated in the accompanying Drawings and described in the foregoing Detailed Description, it will be understood that the invention is not limited to the embodiments disclosed, but is capable of numerous rearrangements, modifications and substitutions without departing from the subject of the invention as set forth and defined by the following claims.

## Claims

1. A telecommunications network, comprising:
a centralized service supply point (130) including a service supplier environment (132) adapted to store executable code for implementing a plurality of telecommunications services along with any data associated with those telecommunications services;
a plurality of distributed service provision points (102, 104, 108, 110) each adapted to operate responsive to a service trigger to request the certain one of the plurality of telecommunications services,
a service execution environment (138) associated with each of the plurality of distributed service provision points that is adapted to respond to the request by downloading the executable code and associated data for the certain one of the telecommunications services from the service supplier environment and to execute the downloaded executable code in view of the downloaded associated data to provide the certain one of the telecommunications services at that distributed service provision point.

2. The network as in claim 1 wherein the executable code comprises Java byte code, the distributed service provision points comprise Java virtual machines and the network is adapted to support a common object request broker architecture (CORBA).

3. The network as in claim 1, wherein the distributed service provision point comprises either a mobile station (110), base station (108), switching node (102) or a visitor location register (104) within a wireless mobile telecommunications network.

4. The network as in claim 3, wherein the data associated with the telecommunications services comprises mobile station subscriber specified data (170) arranged to define how the telecommunications services are to be provided.

5. The network as in claim 4, wherein the data associated with the telecommunications services further comprises wireless mobile telecommunications network configuration data (172) arranged to define how the certain service is to be provided.

6. A service provision point (102, 104, 108, 110) for providing a plurality of services in a telecommunications network,
the service provision point being operationally connectable to a centralized service supply point (130) including a service supplier environment (132) adapted to store executable code for implementing the plurality of telecommunications services along with any data associated with those telecommunications services;
wherein the service provision points is adapted to operate responsive to a service trigger to request the certain one of the plurality of telecommunications services,
and is associated with a service execution environment (138) that is adapted to respond to the request by downloading the executable code and associated data for the certain one of the telecommunications services from the service supplier environment and to execute the downloaded executable code in view of the downloaded associated data to provide the certain one of the telecommunications services at that distributed service provision point.

7. A centralized service supply point (130) for providing executable code for implementing a plurality of telecommunications network services along with any data associated with those telecommunications services to a service execution environment adapted to execute the provided executable code in view of the provided associated data to provide a certain one of the telecommunications services at a distributed service provision point,
wherein the centralized service supply point includes a service supplier environment (132) adapted to store executable code for implementing the plurality of telecommunications services along with any data associated with those telecommunications services and wherein
the centralized service supply point is operationally connectable to plurality of the distributed service provision points (102, 104, 108, 110) each adapted to operate responsive to a service trigger to request the certain one of the plurality of telecommunications services and each associated with a service execution environment and wherein the service supplier environment is adapted to provide the executable code and associated data for the certain one of the telecommunications services to each of the associated service execution environments.

8. A method for providing telecommunications network services, comprising the steps of:
storing in a centralized service supply point (130) within the telecommunications network executable code for implementing a plurality of telecommunications services along with any data associated with those telecommunications services;
triggering at a distributed service provision point (102, 104, 108, 110) within the telecommunications network a request for provision of a certain one of the plurality of telecommunications services;
downloading executable code and associated data for that certain one of the telecommunications services from the centralized service supply point to the distributed service provision point; and
executing the downloaded executable code in view of the downloaded associated data to provide the certain service at the distributed service provision point.

9. The method as in claim 8, wherein the executable code comprises Java byte code, the distributed service provision point comprises a Java virtual machine and the network supports a common object request broker architecture (CORBA).

10. The method as in claim 8, wherein the distributed service provision point comprises either a mobile station (110), base station (108), switching node (102) or a visitor location register (104) within a wireless mobile telecommunications network

11. The method as in claim 10 wherein the data associated with the telecommunications services comprises mobile station subscriber specified data (170) defining how the telecommunications services are to be provided.

12. The method as in claim 11 wherein the data associated with the telecommunications services further comprises mobile telecommunications network configuration data (172) defining how the certain service is to be provided.

13. A method for providing a plurality of telecommunications services implemented by executable code stored in a centralized service supply point (130) along with any data associated with those telecommunications services, the method comprising the steps of:
triggering at a distributed service provision point (102, 104, 108, 110) within the telecommunications network a request for provision of a certain one of the plurality of telecommunications services;
downloading executable code and associated data for that certain one of the telecommunications services from the centralized service supply point to the distributed service provision point; and
executing the downloaded executable code in view of the downloaded associated data to provide the certain service at the distributed service provision point.

14. A method for providing executable code for implementing a plurality of telecommunications services along with any data associated with those telecommunications services in response to a request for provision of a certain one of the plurality of telecommunications services triggered at a distributed service provision point (102, 104, 108, 110) that subsequently executes the provided executable code in view of the provided associated data to provide the certain service, the method comprising the steps of:
storing in a centralized service supply point (130) within the telecommunications network executable code for implementing the plurality of telecommunications services along with any data associated with those telecommunications services; and
providing executable code and associated data for that certain one of the telecommunications services from the centralized service supply point to the distributed service provision point.

## Patentansprüche

1. Telekommunikationsnetz, umfassend:
einen zentralisierten Diensterbringungspunkt (130) einschließlich einer Dienstanbieterumgebung (132), die zum Speichern eines ausführbaren Codes für die Implementierung einer Vielzahl von Telekommunikationsdiensten zusammen mit diesen Telekommunikationsdiensten zugeordneten Daten ausgestaltet ist;
eine Vielzahl von verteilten Dienstbereitstellungspunkten (102, 104, 108, 110), die jeweils ausgestaltet sind, ansprechend auf einen Dienstauslöser zum Anfordern des Bestimmten der Vielzahl von Telekommunikationsdiensten zu wirken,
eine jedem der Vielzahl von verteilten Dienstbereitstellungspunkten zugeordnete Dienstausführungsumgebung (138), die zum Antworten auf die Anforderung durch Herunterladen des ausführbaren Codes und zugeordneter Daten für den Bestimmten der Telekommunikationsdienste von der Diensterbringungsumgebung sowie zum Ausführen des heruntergeladenen ausführbaren Codes hinsichtlich der heruntergeladenen zugeordneten Daten ausgestaltet ist, um den Bestimmten der Telekommunikationsdienste an dem verteilten Dienstbereitstellungspunkt bereitzustellen.

2. Netz nach Anspruch 1, wobei der ausführbare Code einen Java-Byte-Code umfasst, die verteilten Dienstbereitstellungspunkte Java Virtual Machines umfassen und das Netz zur Unterstützung einer Common Object Request Broker Architecture (CORBA) ausgestaltet ist.

3. Netz nach Anspruch 1, wobei der verteilte Dienstbereitstellungspunkt entweder eine Mobilstation (110), eine Basisstation (108), einen Vermittlungsknoten (102) oder eine Besucherdatei (104) innerhalb eines drahtlosen Mobiltelekommunikationsnetzes umfasst.

4. Netz nach Anspruch 3, wobei die den Telekommunikationsdiensten zugeordneten Daten Mobilstationteilnehmer-spezifizierte Daten (170) umfassen, die zum Definieren vorgesehen sind, wie die Telekommunikationsdienste bereitgestellt werden sollen.

5. Netz nach Anspruch 4, wobei die den Telekommunikationsdiensten zugeordneten Daten weiterhin Konfigurationsdaten (172) eines drahtlosen Mobiltelekommunikationsnetzes umfassen, die zum Definieren vorgesehen sind, wie der bestimmte Dienst bereitgestellt werden soll.

6. Dienstbereitstellungspunkt (102, 104, 108, 110) zum Bereitstellen einer Vielzahl von Diensten in einem Telekommunikationsnetz,
wobei der Dienstbereitstellungspunkt funktionsfähig mit einem zentralisierten Diensterbringungspunkt (130) verbindbar ist, einschließlich einer Dienstanbieterumgebung (132), die zum Speichern eines ausführbaren Codes für die Implementierung der Vielzahl von Telekommunikationsdiensten zusammen mit diesen Telekommunikationsdiensten zugeordneten Daten ausgestaltet ist;
wobei der Dienstbereitstellungspunkt ausgestaltet ist, ansprechend auf einen Dienstauslöser zum Anfordern des Bestimmten der Vielzahl von Telekommunikationsdiensten zu wirken,
und einer Dienstausführungsumgebung (138) zugeordnet ist, die zum Antworten auf die Anforderung durch Herunterladen des ausführbaren Codes und zugeordneter Daten für den Bestimmten der Telekommunikationsdienste aus der Diensterbringungsumgebung sowie zum Ausführen des heruntergeladenen ausführbaren Codes hinsichtlich der heruntergeladenen zugeordneten Daten ausgestaltet ist, um den Bestimmten der Telekommunikationsdienste an dem verteilten Dienstbereitstellungspunkt bereitzustellen.

7. Zentralisierter Diensterbringungspunkt (130) zum Bereitstellen eines ausführbaren Codes für die Implementierung einer Vielzahl von Telekommunikationsnetzdiensten zusammen mit diesen Telekommunikationsdiensten zugeordneten Daten an eine Dienstausführungsumgebung, die ausgestaltet ist, den bereitgestellten ausführbaren Code hinsichtlich der bereitgestellten zugeordneten Daten auszuführen, um einen Bestimmten der Telekommunikationsdienste an einem verteilten Dienstbereitstellungspunkt bereitzustellen,
wobei der zentralisierte Diensterbringungspunkt eine Dienstanbieterumgebung (132) enthält, die zum Speichern des ausführbaren Codes für die Implementierung der Vielzahl von Telekommunikationsdiensten zusammen mit diesen Telekommunikationsdiensten zugeordneten Daten ausgestaltet ist, und wobei
der zentralisierte Diensterbringungspunkt funktionsfähig mit der Vielzahl der verteilten Dienstbereitstellungspunkte (102, 104, 108, 110) verbindbar ist, die jeweils ausgestaltet sind, ansprechend auf einen Dienstauslöser zum Anfordern des Bestimmten der Vielzahl von Telekommunikationsdiensten zu wirken, und die jeweils einer Dienstausführungsumgebung zugeordnet sind, und wobei die Diensterbringungsumgebung ausgestaltet ist, den ausführbaren Code und zugeordnete Daten für den Bestimmten der Telekommunikationsdienste an jede der zugeordneten Dienstausführungsumgebungen bereitzustellen.

8. Verfahren zum Bereitstellen von Telekommunikationsnetzdiensten, umfassend die Schritte:
Speichern eines ausführbaren Codes für die Implementierung einer Vielzahl von Telekommunikationsdiensten zusammen mit diesen Telekommunikationsdiensten zugeordneten Daten in einem zentralisierten Diensterbringungspunkt (130) innerhalb des Telekommunikationsnetzes;
Auslösen einer Anforderung für die Bereitstellung eines Bestimmten der Vielzahl von Telekommunikationsdiensten an einem verteilten Dienstbereitstellungspunkt (102, 104, 108, 110) innerhalb des Telekommunikationsnetzes;
Herunterladen des ausführbaren Codes und der zugeordneten Daten für diesen Bestimmten der Telekommunikationsdienste aus dem zentralisierten Diensterbringungspunkt an den verteilten Dienstbereitstellungspunkt, und
Ausführen des heruntergeladenen ausführbaren Codes hinsichtlich der heruntergeladenen zugeordneten Daten für die Bereitstellung des bestimmten Dienstes an dem verteilten Dienstbereitstellungspunkt.

9. Verfahren nach Anspruch 8, wobei der ausführbare Code einen Java-Byte-Code umfasst, der verteilte Dienstbereitstellungspunkt eine Java Virtual Machine umfasst und das Netz eine Common Object Request Broker Architecture (CORBA) unterstützt.

10. Verfahren nach Anspruch 8, wobei der verteilte Dienstbereitstellungspunkt entweder eine Mobilstation (110), eine Basisstation (108), einen Vermittlungsknoten (102) oder eine Besucherdatei (104) innerhalb eines drahtlosen Mobiltelekommunikationsnetzes umfasst.

11. Verfahren nach Anspruch 10, wobei die den Telekommunikationsdiensten zugeordneten Daten Mobilstationteilnehmer-spezifizierte Daten (170) umfassen, die definieren, wie die Telekommunikationsdienste bereitgestellt werden sollen.

12. Verfahren nach Anspruch 11, wobei die den Telekommunikationsdiensten zugeordneten Daten weiterhin Konfigurationsdaten (172) eines Mobiltelekommunikationsnetzes umfassen, die definieren, wie der bestimmte Dienst bereitgestellt werden soll.

13. Verfahren zum Bereitstellen einer Vielzahl von Telekommunikationsdiensten, implementiert durch einen ausführbaren Code, der zusammen mit diesen Telekommunikationsdiensten zugeordneten Daten in einem zentralisierten Diensterbringungspunkt (130) gespeichert ist, wobei das Verfahren die Schritte umfasst:
Auslösen einer Anforderung für die Bereitstellung eines Bestimmten der Vielzahl von Telekommunikationsdiensten an einem verteilten Dienstbereitstellungspunkt (102, 104, 108, 110) innerhalb des Telekommunikationsnetzes;
Herunterladen des ausführbaren Codes und der zugeordneten Daten für diesen Bestimmten der Telekommunikationsdienste von dem zentralisierten Diensterbringungspunkt an den verteilten Dienstbereitstellungspunkt, und
Ausführen des heruntergeladenen ausführbaren Codes hinsichtlich der heruntergeladenen zugeordneten Daten für die Bereitstellung des bestimmten Dienstes an dem verteilten Dienstbereitstellungspunkt.

14. Verfahren zum Bereitstellen eines ausführbaren Codes für die Implementierung einer Vielzahl von Telekommunikationsdiensten zusammen mit diesen Telekommunikationsdiensten zugeordneten Daten als Antwort auf eine Anforderung für die Bereitstellung eines Bestimmten der Vielzahl von Telekommunikationsdiensten, die an einem verteilten Dienstbereitstellungspunkt (102, 104, 108, 110) ausgelöst wird, der anschließend den bereitgestellten ausführbaren Code hinsichtlich der bereitgestellten zugeordneten Daten ausführt, um den bestimmten Dienst bereitzustellen, wobei das Verfahren die Schritte umfasst:
Speichern des ausführbaren Codes für die Implementierung der Vielzahl von Telekommunikationsdiensten zusammen mit diesen Telekommunikationsdiensten zugeordneten Daten in einem zentralisierten Diensterbringungspunkt (130) innerhalb des Telekommunikationsnetzes; und
Bereitstellen des ausführbaren Codes und der zugeordneten Daten für diesen Bestimmten der Telekommunikationsdienste von dem zentralisierten Diensterbringungspunkt an den verteilten Dienstbereitstellungspunkt.

## Revendications

1. Un réseau de télécommunication, comprenant :
un point de fourniture de service centralisé (130) incluant un environnement de fourniture de service (132) apte à enregistrer un code exécutable pour mettre en oeuvre une pluralité de services de télécommunication avec toute donnée associée avec ces services de télécommunication;
une pluralité de points de fourniture de service distribués (102, 104, 108, 110) chacun étant apte à opérer en réponse à un déclencheur de service pour demander un certain service de la pluralité de services de télécommunication;
un environnement d'exécution de service (138) associé avec chacun de la pluralité de points de fourniture de service distribués qui est apte à répondre à la demande en téléchargeant le code exécutable et les données associées pour le certain service des services de télécommunication depuis l'environnement de fourniture de service et à exécuter le code exécutable téléchargé en fonction des données associées téléchargées pour fournir le certain service des services de télécommunication au point de fourniture de service distribué.

2. Le réseau selon la revendication 1, dans lequel le code exécutable comprend un pseudo-code Java, les points de fourniture de service distribués comprenant des machines virtuelles Java et le réseau étant adapté pour supporter une architecture de courtier commun de requêtes d'objets (CORBA).

3. Le réseau selon la revendication 1, dans lequel le point de fourniture de service distribué comprend soit une station mobile (110), une station de base (108), un noeud de commutation (102) ou un registre d'emplacement de visiteur (104) dans un réseau de télécommunication mobile sans-fil.

4. Le réseau selon la revendication 3, dans lequel les données associées avec les services de télécommunication comprennent des données spécifiques à un abonné de la station mobile (170) arrangées pour définir comment les services de télécommunication doivent être fournis.

5. Le réseau selon la revendication 4, dans lequel les données associées avec les services de télécommunication comprennent en outre des données de configuration du réseau de télécommunication mobile sans-fil (172) arrangées pour définir comment le certain service doit être fourni.

6. Un point de fourniture de service (102, 104, 108, 110) pour fournir une pluralité de services dans un réseau de télécommunication,
le point de fourniture de service étant opérationnellement connectable à un point de fourniture de service centralisé (130) incluant un environnement de fourniture de service (132) apte à enregistrer un code exécutable pour mettre en oeuvre la pluralité de services de télécommunication avec toute donnée associée avec ces services de télécommunication;
dans lequel le point de fourniture de service est apte à opérer en réponse à un déclencheur de service pour demander un certain service de la pluralité de services de télécommunication,
et est associé avec un environnement d'exécution de service (138) qui est apte à répondre à la demande en téléchargeant le code exécutable et les données associées pour le certain service des services de télécommunication depuis l'environnement de fourniture de service et à exécuter le code exécutable téléchargé en fonction des données associées téléchargées pour fournir le certain service des services de télécommunication au point de fourniture de service distribué.

7. Un point de fourniture de service centralisé (130) pour fournir un code exécutable pour mettre en oeuvre une pluralité de services de télécommunication réseau avec toute donnée associée avec ces services de télécommunication à un environnement d'exécution de service apte à exécuter le code exécutable fourni en fonction des données associées fournies pour fournir un certain service des services de télécommunication à un point de fourniture de service distribué,
dans lequel le point de fourniture de service centralisé inclut un environnement de fourniture de service (132) apte à enregistrer le code exécutable pour mettre en oeuvre la pluralité de services de télécommunication avec toute donnée associée avec ces services de télécommunication et dans lequel
le point de fourniture de service centralisé est opérationnellement connectable à une pluralité de points de fourniture de service distribués (102, 104, 108, 110) chacun étant apte à opérer en réponse à un déclencheur de service pour demander un certain service de la pluralité de services de télécommunication et chacun étant associé avec un environnement d'exécution de service et dans lequel l'environnement de fourniture de service est apte à fournir le code exécutable et les données associées pour le certain service des services de télécommunication à chacun des environnements d'exécution de service associés.

8. Une méthode pour fournir des services de télécommunication réseau, comprenant les étapes de :
enregistrer dans un point de fourniture de service centralisé (130) dans le réseau de télécommunication un code exécutable pour mettre en oeuvre une pluralité de services de télécommunication avec toute donnée associée avec ces services de télécommunication;
déclencher à un point de fourniture de service distribué (102, 104, 108, 110) dans le réseau de télécommunication une demande de fourniture d'un certain service de la pluralité de services de télécommunication;
télécharger le code exécutable et les données associées pour le certain service des services de télécommunication depuis le point de fourniture de service centralisé vers le point de fourniture de service distribué; et
exécuter le code exécutable téléchargé en fonction des données associées téléchargées pour fournir le certain service au point de fourniture de service distribué.

9. La méthode selon la revendication 8, dans laquelle le code exécutable comprend un pseudo-code Java, le point de fourniture de service distribué comprenant une machine virtuelle Java et le réseau supportant une architecture de courtier commun de requêtes d'objets (CORBA).

10. La méthode selon la revendication 8, dans laquelle le point de fourniture de service distribué comprend soit une station mobile (110), une station de base (108), un noeud de commutation (102) ou un registre d'emplacement de visiteur (104) dans un réseau de télécommunication mobile sans-fil.

11. La méthode selon la revendication 10, dans laquelle les données associées avec les services de télécommunication comprennent des données spécifiques à un abonné de la station mobile (170) définissant comment les services de télécommunication doivent être fournis.

12. La méthode selon la revendication 11, dans laquelle les données associées avec les services de télécommunication comprennent en outre des données de configuration du réseau de télécommunication mobile (172) définissant comment le certain service doit être fourni.

13. Une méthode pour fournir une pluralité de services de télécommunication mise en oeuvre avec un code exécutable enregistré dans un point de fourniture de service centralisé (130) avec toute donnée associée avec ces services de télécommunication, la méthode comprenant les étapes de :
déclencher à un point de fourniture de service distribué (102, 104, 108, 110) dans le réseau de télécommunication une demande de fourniture d'un certain service de la pluralité de services de télécommunication;
télécharger le code exécutable et les données associées pour le certain service des services de télécommunication depuis le point de fourniture de service centralisé vers le point de fourniture de service distribué; et
exécuter le code exécutable téléchargé en fonction des données associées téléchargées pour fournir le certain service au point de fourniture de service distribué.

14. Une méthode pour fournir un code exécutable pour mettre en oeuvre une pluralité de services de télécommunication avec toute donnée associée avec ces services de télécommunication en réponse à une demande de fourniture d'un certain service de la pluralité de services de télécommunication déclenchée à un point de fourniture de service distribué (102, 104, 108, 110) qui exécute subséquemment le code exécutable fourni en fonction des données associées fournies pour fournir le certain service, la méthode comprenant les étapes de :
enregistrer dans un point de fourniture de service centralisé (130) dans le réseau de télécommunication le code exécutable pour mettre en oeuvre la pluralité de services de télécommunication avec toute donnée associée avec ces services de télécommunication; et
fournir le code exécutable et les données associées pour le certain service des services de télécommunication depuis le point de fourniture de service centralisé vers le point de fourniture de service distribué.
